# FASCICULE DE BREVET EUROPEEN

(11) **EP 3 856 618 B1**
(45) Date de publication et mention de la délivrance du brevet: **23.07.2025**
(21) Numéro de dépôt: 19774153.1
(22) Date de dépôt: 29.08.2019
(51) Int. Cl.: B62D 25/16, B62D 25/04

(54) **LIAISON ENTRE L'AILE AVANT ET LE PIED AVANT D'UN VEHICULE AUTOMOBILE**
VERBINDUNG ZWISCHEN DEM VORDEREN FLÜGEL UND DER VORDEREN SÄULE EINES FAHRZEUGS
LINK BETWEEN A FRONT WING AND THE FRONT PILLAR OF A VEHICLE

(30) Priorité: 24.09.2018 FR 1858635
(43) Date de publication de la demande: 04.08.2021
(73) Titulaire: Stellantis Auto SAS, 78300 Poissy (FR)
(72) Inventeur: PICQUET, Christophe, 78000 VERSAILLES (FR); JIDAR, Abdelhakim, 95100 ARGENTEUIL (FR); JEANNEAU, Clement, 92100 BOULOGNE BILLANCOURT (FR); LAMOURIC, Stéphane, 78280 GUYANCOURT (FR); VALTIER, Alain, 78770 AUTOUILLET (FR)
(74) Mandataire: BCIP
(86) Numéro de dépôt international: PCT/FR2019/051997
(87) Numéro de publication internationale: WO 2020/065154

(56) Documents cités:
- EP-A1- 1 854 705
- EP-A1- 2 230 158
- WO-A1-2013/175083
- WO-A1-2014/154962
- WO-A1-2017/182723
- DE-A1- 102013 014 723

## Description

L'invention a trait au domaine des véhicules automobiles, plus particulièrement à la structure avant d'un véhicule automobile.

La structure de carrosserie d'un véhicule automobile comprend classiquement, de chaque côté, un pied avant et un renfort d'aile avant s'étendant longitudinalement depuis le pied avant.

Le document de brevet publié FR 2 992 941 A1 divulgue un dispositif de fixation d'une aile avant sur la paroi de caisse d'un véhicule automobile. Cet enseignement prévoit un support en forme d'équerre fixé d'un côté au pied avant et d'un autre côté à une patte de fixation arrière de l'aile avant. Cela a pour objectif d'empêcher le recul de l'aile vers l'arrière lors d'un choc. Mais cette fixation de l'aile sur le pied avant fragilise l'ensemble de la structure et peut lui occasionner des dégâts importants.

Les documents EP 1 854 705 A1, WO2014/154962 et WO2013175083 décrivent aussi des structures de véhicule comportant un renfort d'aile avant s'étendant vers l'avant et sous l'aile avant depuis un pied avant. Le document EP 1 854 705 A1 divulgue le préambule de la revendication 1.

L'invention a pour objectif de pallier au moins un des inconvénients de l'état de la technique susmentionné. Plus particulièrement, l'invention a pour objectif d'améliorer la réparabilité du véhicule au niveau de la fixation de l'aile avant sur le pied avant, en cas de choc à l'avant.

L'invention a pour objet une structure de carrosserie de véhicule automobile, comprenant : un pied avant de véhicule automobile ; une aile avant avec une patte de fixation arrière ; un renfort d'aile avant s'étendant vers l'avant et sous l'aile avant depuis le pied avant ; un support avec une première portion fixée au pied avant et une deuxième portion fixée à la patte de fixation ; remarquable en ce que la fixation du support au pied avant comprend une fixation au renfort d'aile avant.

Par fixation au renfort d'aile, on entend une fixation directe audit renfort, avantageusement par superposition audit renfort.Selon un mode avantageux de l'invention, le renfort d'aile avant comprend une patte s'étendant entre le pied avant et la première portion du support.

Selon un mode avantageux de l'invention, la première portion du support est fixée par des points de soudure par résistance électrique à la patte du renfort d'aile avant.

Selon un mode avantageux de l'invention, la structure comporte un renfort de pied avant, la fixation du support au pied avant comprenant une fixation à audit renfort du pied avant, le renfort du pied avant étant un embouti disposé contre une face intérieure dudit pied.

Selon un mode avantageux de l'invention, le pied avant présente une section transversale en U et le renfort du pied avant présente une section en U épousant ladite section transversale.

Selon un mode avantageux de l'invention, la section transversale en U du pied avant comprend, en outre, des ailes formant des feuillures de jonction avec une contre-pièce dudit pied ; la section en U du renfort du pied avant comprenant, en outre, des ailes prises en sandwich dans lesdites feuillures.

Selon un mode avantageux de l'invention, la section transversale en U du pied avant est formée par un embouti formant un côté de caisse délimitant une entrée de porte avant du véhicule.

Selon un mode avantageux de l'invention, le renfort du pied avant est fixé au pied avant par des points de soudure par résistance électrique.

Selon un mode avantageux de l'invention, les points de soudure fixant le renfort du pied avant audit pied comprennent des points de soudure fixant également la patte du renfort d'aile avant audit pied.

Selon un mode avantageux de l'invention, les première et deuxième portions du support forment une équerre, la première portion étant fixée à une face extérieure et longitudinale du pied avant et la deuxième portion faisant saillie de ladite face transversalement.

Les mesures de l'invention sont intéressantes en ce qu'elles permettent d'améliorer la zone de fixation entre l'aile avant et le pied avant d'un véhicule automobile. Cela passe par au moins une des deux mesures consistant à fixer le support au renfort d'aile avant et à prévoir un renfort du pied avant. La patte d'extension du renfort d'aile avant, positionnée entre le support et le pied avant permet, en outre, d'améliorer la transmission des efforts, en cas de choc avant, depuis ledit renfort vers le pied avant. La fixation des différentes pièces par des points de soudure électrique assure une fixation efficace tout en étant simple à mettre en œuvre. La fabrication des différentes pièces est réalisée par emboutissage, une technique également maîtrisée et facile à mettre en œuvre.

D'autres caractéristiques et avantages de la présente invention seront mieux compris à l'aide de la description et des dessins parmi lesquels :
- La figure 1 est une vue en perspective d'un véhicule automobile selon l'invention ;
- La figure 2 est une vue latérale d'une structure de carrosserie de véhicule, plus particulièrement d'une zone de fixation entre un pied avant et une aile avant du véhicule de la figure 1 ;
- La figure 3 est un grossissement de la zone de fixation de la figure 2, vue de l'extérieur de la structure de carrosserie du véhicule ;
- La figure 4 est un grossissement de la zone de fixation représentée aux figures 2 et 3, vue de l'intérieur de la structure de carrosserie du véhicule.

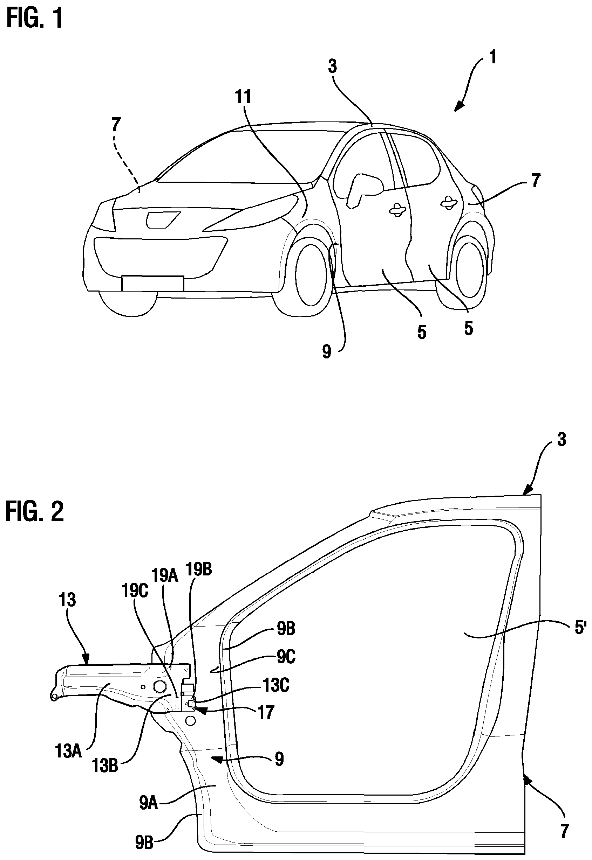

La figure 1 montre une vue en perspective d'un véhicule automobile présentant une structure de carrosserie selon l'invention. La structure de carrosserie 3 selon l'invention est essentiellement métallique et comprend deux côtés de caisse 7, positionnés à chacun des côtés du véhicule 1. Ces côtés de caisse 7 servent notamment de support à un toit, et d'encadrement à des portes 5 du véhicule 1. L'avant du côté de caisse 7 forme un pied avant 9, rattaché à son extrémité antérieure à une aile avant 11 de véhicule 1 par le biais d'une patte de fixation arrière de l'aile avant (non visible sur ces figures).

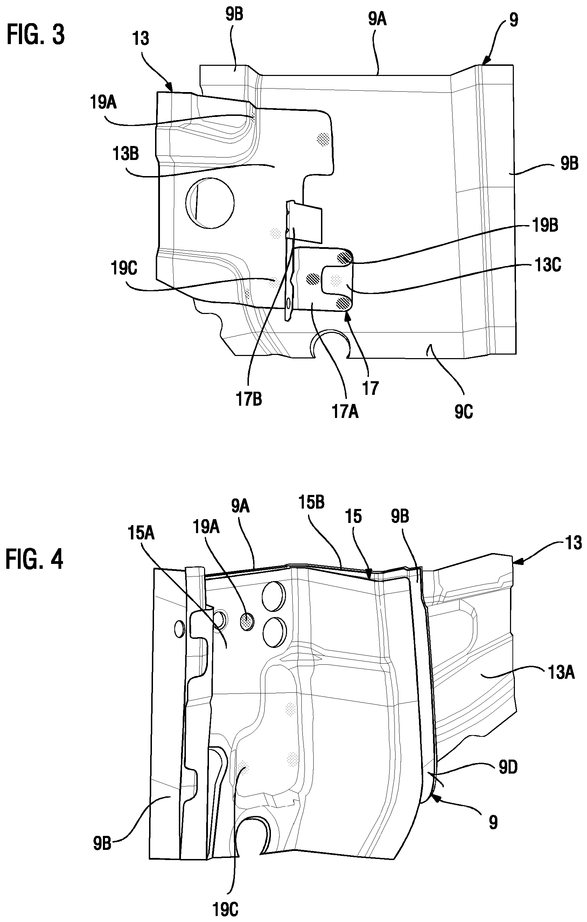

Les figures 2 et 3 montrent une partie antérieure du côté de caisse montré à la figure 1, au stade de ferrage. Ainsi, le côté de caisse 7 délimite une entrée 5' de porte avant de véhicule automobile. Le pied avant 9 du véhicule présente une section transversale et horizontale en U, avec une base 9A et deux ailes 9B, positionnées à l'avant et à l'arrière de ladite base 9A. Les ailes avant et arrière 9B forment des feuillures de jonction avec les ailes d'une contre-pièce du pied avant (non visible sur ces figures). Le pied avant 9 et la contre-pièce du pied avant 9 correspondant forment ainsi une structure creuse. La base 9A du pied avant 9 présente en outre une face extérieure longitudinale 9C orientée vers l'extérieur du véhicule, qui sert à la fixation d'un renfort d'aile avant 13 selon l'invention.

Le renfort d'aile avant 13 est positionné à l'arrière de l'aile avant (visible à la figure 1), et va la renforcer, notamment en cas de choc. Ce renfort 13 sert également à transmettre les efforts portés sur l'aile avant au pied avant 9 du véhicule. Le renfort d'aile avant 13 s'étend depuis le pied avant 9 vers l'avant du véhicule, il comprend une portion longitudinale 13A de section transversale en U, prolongée à l'arrière par une portion arrière 13B. Cette portion arrière 13B est fixée au pied avant 9 par des points de soudure par résistance électrique 19A. Á une extrémité postérieure de la portion arrière 13B du renfort 13 se trouve une patte 13C, qui soutient un support 17.

Le support 17 selon l'invention comprend une première portion 17A, fixée au pied avant 9 et une deuxième portion 17B fixée à la patte de fixation arrière de l'aile avant (non visible sur ces figures). La première portion 17A est plus précisément fixée à la patte 13C du renfort d'aile avant 13. Cette fixation est préférentiellement réalisée par soudure par résistance électrique, correspondant aux points de soudures 19B. Les première et deuxième portions (17A, 17B) du support 17 forment avantageusement une équerre, dont la première portion 17A est fixée à la face extérieure et longitudinale 9C du pied avant 9. La deuxième portion 17B fait alors saillie transversalement de la face extérieure et longitudinale 9C.

Sur ces figures on peut également voir un troisième point de soudure par résistance électrique 19C, qui va permettre la fixation entre la patte 13C du renfort d'aile avant 13, le pied avant 9 et un renfort de pied avant décrit à la figure 4.

La figure 4 montre une vue de l'arrière de la zone de fixation montrée à la figure 3. On peut tout particulièrement voir le renfort de pied avant 15. Ce renfort de pied avant 15 est préférentiellement un embouti, disposé contre une face intérieure 9D du pied avant 9. Le renfort de pied avant 15 présente avantageusement une section transversale en U, qui épouse la section transversale du pied avant 9. Ainsi, la section transversale du renfort de pied avant 15 comprend une base 15A avec deux ailes 15B, qui sont préférentiellement prises en sandwich dans les feuillures de jonction du pied avant 9. La présence d'orifices dans le renfort de pied avant 15 permet également de voir l'un des points de soudures 19A, qui fixe le renfort d'aile avant 13 au pied avant 9 du véhicule.

## Revendications

1. Structure de carrosserie (3) de véhicule automobile (1), comprenant :
- un pied avant (9) de véhicule automobile (1) ;
- une aile avant (11) avec une patte de fixation arrière ;
- un renfort d'aile avant (13) s'étendant vers l'avant et sous l'aile avant (11) depuis le pied avant (9) ;
- un support (17) avec une première portion (17A) fixée au pied avant (9) et une deuxième portion (17B) fixée à la patte de fixation ;
**caractérisée en ce que**
la fixation du support (17) au pied avant (9) comprend une fixation au renfort d'aile avant (13).

2. Structure de carrosserie (3) selon la revendication 1, **caractérisée en ce que** le renfort d'aile avant (13) comprend une patte (13C) s'étendant entre le pied avant (9) et la première portion (17A) du support (17).

3. Structure de carrosserie (3) selon la revendication 2, **caractérisée en ce que** la première portion (17A) du support (17) est fixée par des points de soudure par résistance électrique (19B) à la patte (13C) du renfort d'aile avant (13).

4. Structure de carrosserie (3) selon l'une des revendications 1 à 3, **caractérisée en ce qu'**elle comporte un renfort de pied avant(15), la fixation du support (17) au pied avant (9) comprenant une fixation à audit renfort du pied avant (15), le renfort du pied avant (15) étant un embouti disposé contre une face intérieure (9D) dudit pied (9).

5. Structure de carrosserie (3) selon la revendication 4, **caractérisée en ce que** le pied avant (9) présente une section transversale en U et le renfort du pied avant (15) présente une section en U épousant ladite section transversale.

6. Structure de carrosserie (3) selon la revendication 5, **caractérisée en ce que** la section transversale en U du pied avant (9) comprend, en outre, des ailes (9B) formant des feuillures de jonction avec une contre-pièce dudit pied (9) ; la section en U du renfort du pied avant (15) comprenant, en outre, des ailes (15B) prises en sandwich dans lesdites feuillures.

7. Structure de carrosserie (3) selon l'une des revendications 5 et 6, **caractérisée en ce que** la section transversale en U du pied avant (9) est formée par un embouti formant un côté de caisse (7) délimitant une entrée (5') de porte avant (5) du véhicule (1).

8. Structure de carrosserie (3) selon l'une des revendications 4 à 7, **caractérisée en ce que** le renfort du pied avant (15) est fixé au pied avant (9) par des points de soudure par résistance électrique (19C).

9. Structure de carrosserie (3) selon l'une des revendications 2 et 3, et selon la revendication 8, **caractérisée en ce que** les points de soudure (19C) fixant le renfort du pied avant (15) audit pied (9) comprennent des points de soudure (19C) fixant également la patte (13C) du renfort d'aile avant (13) audit pied (9).

10. Structure de carrosserie (3) selon l'une des revendications 1 à 9, **caractérisée en ce que** les première et deuxième portions (17A ; 17B) du support (17) forment une équerre, la première portion (17A) étant fixée à une face extérieure et longitudinale (9C) du pied avant (9) et la deuxième portion (17B) faisant saillie de ladite face (9C) transversalement.

## Patentansprüche

1. Karosseriestruktur (3) eines Kraftfahrzeugs (1), bestehend aus:
- einen Vorderfuß (9) eines Kraftfahrzeugs (1);
- einen vorderen Flügel (11) mit einer hinteren Befestigungslasche;
- eine Vorderflügelverstärkung (13), die sich vom Vorderfuß (9) nach vorn und unter den Vorderflügel (11) erstreckt;
- eine Halterung (17) mit einem am Vorderfuß (9) befestigten ersten Abschnitt (17A) und einem am Befestigungslappen befestigten zweiten Abschnitt (17B);
**dadurch gekennzeichnet, dass**
die Halterung (17) am Vorderfuß (9) umfasst eine Halterung an der Vorderflügelverstärkung (13).

2. Karosseriestruktur (3) nach Anspruch 1, **dadurch gekennzeichnet, dass** die vordere Schenkelverstärkung (13) eine Lasche (13C) umfasst, die sich zwischen dem vorderen Fuß (9) und dem ersten Abschnitt (17A) des Trägers (17) erstreckt.

3. Karosseriestruktur (3) nach Anspruch 2, **dadurch gekennzeichnet, dass** der erste Abschnitt (17A) des Trägers (17) durch elektrische Widerstandsschweißpunkte (19B) an der Lasche (13C) der vorderen Flügelverstärkung (13) befestigt ist.

4. Karosseriestruktur (3) nach einem der Ansprüche 1 bis 3, **dadurch gekennzeichnet, dass** sie eine vordere Fußverstärkung (15) umfasst, wobei die Befestigung des Trägers (17) am vorderen Fuß (9) eine Befestigung an der vorderen Fußverstärkung (15) umfasst, wobei die vordere Fußverstärkung (15) eine an einer Innenfläche (9D) des Fußes (9) angeordnete Prägung ist.

5. Karosseriestruktur (3) nach Anspruch 4, **dadurch gekennzeichnet, dass** der vordere Fuß (9) einen U-förmigen Querschnitt aufweist und die Verstärkung des vorderen Fußes (15) einen U-förmigen Querschnitt aufweist, der dem genannten Querschnitt entspricht.

6. Karosseriestruktur (3) nach Anspruch 5, **dadurch gekennzeichnet, dass** der U-förmige Querschnitt des vorderen Fußes (9) ferner Flügel (9B) aufweist, die Laubblätter zum Verbinden mit einem Gegenstück des Fußes (9) bilden; wobei der U-förmige Querschnitt der Verstärkung des vorderen Fußes (15) ferner Flügel (15B) aufweist, die in den Laubblättern sandwichartig eingeschlossen sind.

7. Karosseriestruktur (3) nach einem der Ansprüche 5 und 6, **dadurch gekennzeichnet, dass** der U-förmige Querschnitt des vorderen Fußes (9) durch eine Einstülpung gebildet ist, die eine Aufbauseite (7) bildet, die einen Eingang (5') der vorderen Tür (5) des Fahrzeugs (1) begrenzt.

8. Karosseriestruktur (3) nach einem der Ansprüche 4 bis 7, **dadurch gekennzeichnet, dass** die Verstärkung des Vorderfußes (15) am Vorderfuß (9) durch elektrische Widerstandsschweißpunkte (19C) befestigt ist.

9. Karosseriestruktur (3) nach einem der Ansprüche 2 und 3 und nach Anspruch 8, **dadurch gekennzeichnet, dass** die Schweißpunkte (19C), die die Verstärkung des vorderen Fußes (15) an dem Fuß (9) befestigen, Schweißpunkte (19C) umfassen, die auch die Lasche (13C) der Verstärkung des vorderen Flügels (13) an dem Fuß (9) befestigen.

10. Karosseriestruktur (3) nach einem der Ansprüche 1 bis 9, **dadurch gekennzeichnet, dass** der erste und der zweite Abschnitt (17A; 17B) des Trägers (17) einen Winkel bilden, wobei der erste Abschnitt (17A) an einer äußeren und Längsfläche (9C) des vorderen Fußes (9) befestigt ist und der zweite Abschnitt (17B) von der Fläche (9C) in Querrichtung vorsteht.

## Claims

1. Motor vehicle body structure (3) (1), comprising:
- a motor vehicle front foot (9) (1);
- a front wing (11) with a rear fixing lug;
- a front wing reinforcement (13) extending forward and under the front wing (11) from the front foot (9);
- a support (17) with a first portion (17A) fixed to the front foot (9) and a second portion (17B) fixed to the fixing lug;
**characterised in that**
the attachment of the support (17) to the front foot (9) comprises an attachment to the front wing reinforcement (13).

2. Bodywork structure (3) according to claim 1, **characterised in that** the front wing reinforcement (13) comprises a lug (13C) extending between the front foot (9) and the first portion (17A) of the support (17).

3. Bodywork structure (3) according to claim 2, **characterised in that** the first portion (17A) of the support (17) is fixed by electrical resistance welding points (19B) to the lug (13C) of the front wing reinforcement (13).

4. Bodywork structure (3) according to one of claims 1 to 3, **characterised in that** it comprises a front foot reinforcement (15), the fixing of the support (17) to the front foot (9) comprising a fixing to said reinforcement of the front foot (15), the reinforcement of the front foot (15) being a stamped piece arranged against an inner face (9D) of said foot (9).

5. Bodywork structure (3) according to claim 4, **characterised in that** the front leg (9) has a U-shaped cross section and the reinforcement of the front leg (15) has a U-shaped cross section matching said cross section.

6. Bodywork structure (3) according to claim 5, wherein the U-shaped cross-section of the front foot (9) further comprises wings (9B) forming rabbets for joining with a counter-component of said foot (9); the U-shaped cross-section of the reinforcement of the front foot (15) further comprising wings (15B) sandwiched in said rabbets.

7. Bodywork structure (3) according to either of claims 5 and 6, **characterised in that** the U-shaped cross-section of the front foot (9) is formed by a press-formed body (7) defining an entry (5') of the front door (5) of the vehicle (1).

8. Bodywork structure (3) according to one of claims 4 to 7, **characterised in that** the reinforcement of the front foot (15) is fixed to the front foot (9) by electrical resistance welding points (19C).

9. Bodywork structure (3) according to either of claims 2 and 3 and according to Claim 8, **characterised in that** the welding points (19C) fixing the reinforcement of the front leg (15) to the said leg (9) comprise welding points (19C) also fixing the lug (13C) of the front wing reinforcement (13) to the said leg (9).

10. Bodywork structure (3) according to one of claims 1 to 9, **characterised in that** the first and second portions (17A; 17B) of the support (17) form an angle bracket, the first portion (17A) being fixed to an outer and longitudinal face (9C) of the front foot (9) and the second portion (17B) projecting transversely from the said face (9C).
